# EUROPÄISCHE PATENTSCHRIFT

(11) **EP 2 605 361 B1**
(45) Veröffentlichungstag und Bekanntmachung des Hinweises auf die Patenterteilung: **15.06.2022**
(21) Anmeldenummer: 13000391.6
(22) Anmeldetag: 21.04.2011
(51) Int. Cl.: H02J 5/00, H02J 50/12

(54) **Anordnung und Verfahren zum Betreiben einer Anordnung zur induktiven Energieübertragung an einen elektrischen Verbraucher**
Assembly and method for operating an assembly for inductive energy transmission to an electrical consumer
Agencement et procédé de fonctionnement d'un agencement destinés à la transmission d'énergie inductive vers un consommateur électrique

(30) Priorität: 20.05.2010 DE 102010022122
(43) Veröffentlichungstag der Anmeldung: 19.06.2013
(62) Teilanmeldung aus: 11718289.9
(73) Patentinhaber: SEW-Eurodrive GmbH & Co, D-76646 Bruchsal (DE)
(72) Erfinder: Schmidt, Josef, 76676 Graben-Neudorf (DE); Podbielski, Leobald, 76199 Karlsruhe (DE); Kuhfuß, Valentin, 76297 Stutensee (DE)

(56) Entgegenhaltungen:
- JP-A- 2001 357 992
- US-A- 5 898 579
- US-A- 5 978 242
- US-A1- 2010 109 445
- US-A1- 2017 126 281

## Beschreibung

Die Erfindung betrifft eine Anordnung und ein Verfahren zum Betreiben einer Anordnung zur induktiven Energieübertragung an einen elektrischen Verbraucher.

Es ist bekannt, einen Verbraucher resonant induktiv zu versorgen.

**Aus der** US 5 978 242 A **ist ein AC/DC-Gleichrichter bekannt.**

**Aus der** US 5 898 579 A **ist eine berührungslose Leistungsübertragung bekannt.**

**Aus der** JP 2001 357992 A **ist eine Entladelampenbeleuchtungsanordnung bekannt.**

**Aus der** US 2010/109445 A1 **ist als nächstliegender Stand der Technik ein berührungsloser Energietransfer bekannt.**

Der Erfindung liegt daher die Aufgabe zugrunde, eine Anordnung zum Betreiben einer Anordnung zur induktiven Energieübertragung an einen elektrischen Verbraucher weiterzubilden, wobei der Wirkungsgrad verbessert werden soll, insbesondere im Dauerbetrieb und unter wechselhaften Einflüssen und Belastungen.

Erfindungsgemäß wird die Aufgabe bei der Anordnung nach den in Anspruch 5 und bei dem

Verfahren nach den in Anspruch 1 angegebenen Merkmalen gelöst.

Wichtige Merkmale der Erfindung bei der Anordnung zur induktiven Energieübertragung an einen elektrischen Verbraucher sind, dass eine Sekundärwicklung induktiv gekoppelt ist mit einem Primärleiter, wobei zur Bildung eines Schwingkreises der Sekundärwicklung eine Anordnung von Kapazitäten zugeschaltet ist,
wobei aus dem Schwingkreis eine Hochsetzstelleranordnung mit Gleichrichteranordnung versorgt ist, deren Ausgangsspannung einen Verbraucher speist.

Von Vorteil ist dabei, dass die für den Verbraucher bereit stellbare Spannung hochsetzbar ist und daher die Sekundärwicklung nur eine geringe Anzahl von Windungen aufweisen darf. Somit sind die in und an der Sekundärwicklung auftretenden Spannungen, insbesondere die einzelnen, zwischen Windungen der Sekundärwicklung auftretenden Spannungen klein haltbar, so dass keine aufwendige Isolierung notwendig ist.

Bei einer vorteilhaften Ausgestaltung weist die Hochsetzstelleranordnung einen Spartransformator auf, dessen Eingangsstrom, insbesondere primärseitig, mittels eines Schalters AC-S1 steuerbar, insbesondere getaktet betrieben, ist. Von Vorteil ist dabei, dass mittels der Veränderung der Taktung eine davon abhängig verschieden hohe Ausgangsspannung erzeugbar ist. Insbesondere ist bei einer pulsweitenmodulierten Ansteuerung die Pulsweite und/oder Pulsweitenmodulationsfrequenz steuerbar und somit eine entsprechende Ausgangsspannung erzeugbar.

Bei einer vorteilhaften Ausgestaltung wird die Ausgangsseite des Spartransformators, insbesondere dessen Sekundärseite, einer Gleichrichteranordnung zugeführt. Von Vorteil ist dabei, dass ausgangsseitig eine unipolare Spannung, insbesondere Gleichspannung, dem Verbraucher bereit stellbar ist.

Bei einer vorteilhaften Ausgestaltung ist aus dem Schwingkreis die Eingangsseite eines Spartransformators versorgt, dessen Ausgangsseite einen Gleichrichter versorgt, aus dem über Mittel zur Glättung ein Verbraucher versorgbar ist. Von Vorteil ist dabei, dass eine geglättete Spannung zur Verfügung stellbar ist, wobei die Mittel zur Glättung derart ausführbar sind, insbesondere als Reihenschaltung zweier oder mehrerer Kapazitäten, dass mittels eines Schalters eine Verbindung zwischen den Mitteln und dem Gleichrichter herstellbar ist, dass eine spannungserhöhende Wirkung erzielbar ist, insbesondere eine Spannungsverdopplung durch Umschalten zwischen Spitzenwertgleichrichtung und Spitze-Spitzenwertgleichrichtung.

**Erfindungsgemäß** ist der Eingangsseite des Spartransformators ein steuerbarer Schalter parallel oder in Reihe zugeschaltet, so dass mittels getakteter Ansteuerung dieses Schalters die Ausgangsspannung auf einen Sollwert hin regelbar ist, insbesondere wobei das Ansteuersignal, insbesondere dessen Frequenz und/oder Pulsweitenmodulationsverhältnis, Stellgröße eines Reglers ist, dem der erfasste Ausgangsspannungswert als Istwert zugeführt wird. Von Vorteil ist dabei, dass bei parallel Schalten ein Kurzschließen des Eingangs ausführbar ist, insbesondere bei Versorgung aus einem Reihenschwingkreis, und bei in Reihe Schalten ein Auftrennen des Eingangs, insbesondere bei Versorgung aus einem Parallelschwingkreis.

Bei einer vorteilhaften Ausgestaltung ist die Gleichrichteranordnung zwischen einer Spitzenwertgleichrichtung und einer Spitze-Spitzenwertgleichrichtung umschaltbar, insbesondere also eine Spannungsdopplerschaltung aufweist. Von Vorteil ist dabei, dass eine spannungserhöhende oder sogar spannungsverdoppelnde Wirkung erzielbar ist. Durch getaktetes Betreiben des umschaltenden Mittels, insbesondere Schalters, ist auch ein Regeln der Spannung auf einen Sollwert hin ermöglicht.

Bei einer vorteilhaften Ausgestaltung weist die Gleichrichteranordnung einen Halbbrückengleichrichter auf. Von Vorteil ist dabei, dass eine besonders einfache Gleichrichtung mit hohem Wirkungsgrad ausführbar ist.

Bei einer vorteilhaften Ausgestaltung sind der Gleichrichteranordnung ausgangsseitig eine Reihenschaltung von Kapazitäten zugeschaltet sind, insbesondere parallel zugeschaltet sind, wobei ein Schalter derart zwischen einer Halbbrücke der Gleichrichteranordnung und einem Verbindungsknoten zwischen den Kapazitäten angeordnet ist, dass eine Beeinflussung der Ausgangsspannung mittels der Schalterstellung dieses Schalters erreichbar ist. Von Vorteil ist dabei, dass ein Umschalten zur Spannungserhöhung ausführbar ist. Mittels getaktetem Betreiben bei geeigneter Dimensionierung der Mittel zum Glätten der Ausgangsspannung ist sogar ein Hinregeln der Ausgangsspannung auf einen Sollwert hin ermöglicht.

Bei einer vorteilhaften Ausgestaltung ist die Gleichrichteranordnung, insbesondere der Schalter zwischen der Halbbrücke der Gleichrichteranordnung und dem Verbindungsknoten derart getaktet betreibbar ist, dass die Ausgangsspannung der Gleichrichtanordnung auf ihren Sollwert hin regelbar ist,
und/oder dass
der Eingangsstrom am Spartransformator derart getaktet betreibbar ist, dass die Ausgangsspannung der Gleichrichtanordnung auf ihren Sollwert hin regelbar ist. Von Vorteil ist dabei, dass zwei Stellglieder vorgesehen sind, mit welchen wahlweise ein Beeinflussen der Ausgangsseite ermöglicht ist. Bei Verwendung beider Stellglieder ist ein besonders schnelles und effektives Hinregeln auf den gewünschten Sollwert ermöglicht.

Bei einer vorteilhaften Ausgestaltung ist zur Bildung eines Schwingkreises der Sekundärwicklung eine Anordnung von Kapazitäten zugeschaltet, wobei mindestens eine der Kapazitäten mit einem zugeordneten, steuerbaren Halbleiterschalter zuschaltbar oder wegschaltbar ist, insbesondere also für den Schwingkreis wirksam oder unwirksam machbar ist, insbesondere zum Abstimmen der Resonanzfrequenz des Schwingkreises auf eine Sollfrequenz, insbesondere auf eine Frequenz des in den Primärleiter eingeprägten Stromes. Von Vorteil ist dabei, dass auch während des Betriebs ein Abstimmen der Resonanzfrequenz des Schwingkreises auf die Frequenz des Primärleiterstroms ermöglicht ist. Somit sind Toleranzen oder Änderungen der Werte der Kapazität oder Induktivität des Schwingkreises ausgleichbar. Beispielsweise werden die Werte verändert durch Temperaturänderungen während des Betriebs oder andere Einflüsse, die im Betrieb der die Anordnung umfassenden Anlage auftreten. Ein Abstimmen ist somit beispielsweise auch in regelmäßigen zeitlichen Abständen sinnvoll. Der Abstimmvorgang ist beispielsweise einleitbar durch ein Startsignal einer übergeordneten Steuerung, wobei der Zeitpunkt des Startsignales derart gewählt ist, dass keine Störung des sonstigen Betriebes ausgelöst wird. Denn für die Zeitdauer des Abstimmens ist keine Energie an den Verbraucher zur Verfügung stellbar, weil der Schwingkreis in den unbelasteten Zustand gebracht wird.

Vorzugsweise ist die Zeitdauer für das Abstimmen derart klein gewählt, dass die vorhandenen Energiepuffer zur Versorgung des Verbrauchers in der Lage sind. Die Energiepuffer umfassen zumindest auch die Mittel zur Glättung der Ausgangsspannung des Gleichrichters.

Mittels der Erfindung ist also auch ein automatisches Abstimmen ausführbar, das von einer Steuerelektronik veranlasst und durchgeführt wird.

Bei einer vorteilhaften Ausgestaltung ist der Primärleiter mit einem mittelfrequenten Strom beaufschlagt, insbesondere der eine Frequenz zwischen 10 und 500 kHz aufweist. Von Vorteil ist dabei, dass ein hoher Wirkungsgrad erzielbar ist und mittels aufmodulierter Stromanteile, welche höher frequent sind, also in einem Frequenzband liegen, das beabstandet ist vom für den Primärleiterstrom verwendeten Frequenzband, eine Datenübertragung ohne zusätzliche Sende- und Empfangsmittel ermöglicht ist.

Bei einer vorteilhaften Ausgestaltung ist der Sekundärwicklung die Anordnung von Kapazitäten parallel oder in Reihe zugeschaltet. Von Vorteil ist dabei, dass die Erfindung in verschiedenen Ausführungsformen des Schwingkreises anwendbar ist.

Bei einer vorteilhaften Ausgestaltung ist die Anordnung von Kapazitäten als eine Parallelschaltung der Kapazitäten oder eine Reihenschaltung der Kapazitäten ausgeführt. Von Vorteil ist dabei, dass bei Zuschaltung aller Kapazitäten eine hohe oder niedrige Ersatz-Kapazität der Anordnung zusammenstellbar ist

Bei einer vorteilhaften Ausgestaltung ist der Schwingkreis ein Parallelschwingkreis oder ein Reihenschwingkreis. Von Vorteil ist dabei, dass verschieden große Spannungen bei den verschiedenen Ausführungen des Schwingkreises auftreten, jedoch in jeder Ausführungsform die Erfindung anwendbar ist, also ein Abstimmen des Schwingkreises auf die Primärleiterstromfrequenz zur Leistungsübertragung ermöglicht ist.

Bei einer vorteilhaften Ausgestaltung ist der Schwingkreis mit Sekundärwicklung und Kapazitäten derart dimensioniert und die Kapazitäten sind derart wirksam oder unwirksam gemacht, dass die zugehörige Resonanzfrequenz der wirksamen Komponenten des Schwingkreises im Wesentlichen der Mittelfrequenz des in den Primärleiter eingeprägten Stromes entspricht. Von Vorteil ist dabei, dass auch bei schwacher Kopplung ein hoher Wirkungsgrad bei der Energieübertragung erzielbar ist.

Bei einer vorteilhaften Ausgestaltung ist der elektrische Verbraucher zusammen mit dem Schwingkreis auf einem relativ zum Primärleiter bewegbar angeordneten Anlagenteil, insbesondere Fahrzeug, angeordnet,
insbesondere wobei der Verbraucher der elektrische Antrieb des Anlagenteils ist. Von Vorteil ist dabei, dass die Energie verschleißfrei an den bewegbar angeordneten Verbraucher übertragbar ist.

Bei einer vorteilhaften Ausgestaltung ist die dem steuerbaren Halbleiterschalter zugeordnete Kapazität diesem parallel oder in Reihe zugeschaltet. Von Vorteil ist dabei, dass die Kapazität zuschaltbar oder wegschaltbar ist, also wirksam oder unwirksam machbar ist.

Bei einer vorteilhaften Ausgestaltung ist die Anordnung der Kapazitäten eine Reihenschaltung oder eine Parallelschaltung der Kapazitäten. Von Vorteil ist dabei, dass bei der Reihenschaltung ein engerer Frequenzbereich fein abstimmbar ist im Vergleich zur Parallelschaltung und bei der Parallelschaltung ein weiterer Frequenzbereich im Vergleich zur Reihenschaltung abstimmbar ist

Bei einer vorteilhaften Ausgestaltung ist aus dem Schwingkreis die Eingangsseite eines Spartransformators versorgt, dessen Ausgangsseite einen Gleichrichter versorgt, aus dem über Mittel zur Glättung ein Verbraucher versorgbar ist. Von Vorteil ist dabei, dass die Ausgangsspannung regelbar ist, indem der Primärstrom des Spartransformators getaktet gesteuert wird und somit sekundärseitig der Spannungswert auf einen Sollwert hin regelbar ist.

Bei einer vorteilhaften Ausgestaltung ist der Eingangsseite des Spartransformators ein steuerbarer Schalter parallel oder in Reihe zugeschaltet, so dass mittels getakteter Ansteuerung dieses Schalters die Ausgangsspannung auf einen Sollwert hin regelbar ist, insbesondere wobei das Ansteuersignal, insbesondere dessen Frequenz und/oder Pulsweitenmodulationsverhältnis, Stellgröße eines Reglers ist, dem der erfasste Ausgangsspannungswert als Istwert zugeführt wird. Von Vorteil ist dabei, dass eine gewünschte Spannung zur Verfügung stellbar ist auch bei schwankender magnetischer Kopplung zwischen Sekundärwicklung und in der Anlage stationär verlegtem Primärleiter.

**Wichtige Merkmale bei dem Verfahren nach Anspruch 1** zum Betreiben einer Anordnung sind, dass
wird in einem ersten Schritt die Ausgangsseite des Schwingkreises weggeschaltet, insbesondere indem bei Ausführung als Reihenschwingkreis die Ausgangsseite kurzgeschlossen wird und bei Ausführung als Parallelschwingkreis abgetrennt wird,
in einem zweiten Schritt die Phasendifferenz zwischen dem durch die Sekundärspule fließenden Strom und der an der Sekundärspule anliegenden Spannung bestimmt wird,
und in einem dritten Schritt die Ausgangsseite wieder zugeschaltet wird. Von Vorteil ist dabei, dass ein Abstimmen der Resonanzfrequenz automatisiert ausführbar ist.

**Bei einer vorteilhaften Ausgestaltung wird** die Gleichrichteranordnung, insbesondere der Schalter zwischen der Halbbrücke der Gleichrichteranordnung und dem Verbindungsknoten derart getaktet betrieben wird, dass die Ausgangsspannung der Gleichrichtanordnung auf ihren Sollwert hin geregelt wird,
und/oder dass
der Eingangsstrom am Spartransformator derart getaktet betrieben wird, dass die Ausgangsspannung der Gleichrichtanordnung auf ihren Sollwert hin geregelt wird.

Von Vorteil ist dabei, dass ein sehr effektives und schnelles Hinregeln ausführbar ist.

Bei einer vorteilhaften Ausgestaltung werden der oder die Schalter derart angesteuert, dass mittels der zugehörigen Kapazität oder Kapazitäten die Resonanzgüte und/oder die Resonanzfrequenz des Schwingkreises verbessert oder auf einen Sollwert hingesteuert wird, insbesondere in diskreter Weise. Von Vorteil ist dabei, dass

Bei einer vorteilhaften Ausgestaltung wird der der Eingangsseite des Spartransformators zugeschaltete Schalter derart getaktet betrieben und/oder das Taktsignal derart gestellt, dass die dem Verbraucher zur Verfügung gestellte Ausgangsspannung oder der dem Verbraucher zur Verfügung gestellte Ausgangsstrom auf einen Sollwert hin geregelt wird. Von Vorteil ist dabei, dass ein benötigter Strom bereit stellbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine erste erfindungsgemäße Anordnung schematisch dargestellt, wobei eine Reihenschaltung von steuerbaren Schaltern AC-S2 bis AC-S4 vorgesehen ist.

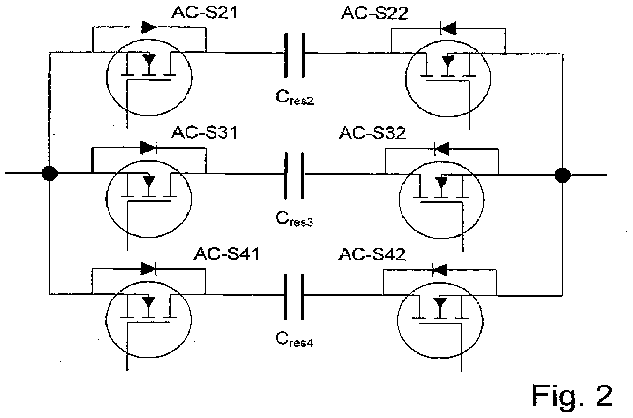

In Figur 2 ist ein alternatives erfindungsgemäßes Ausführungsbeispiel gezeigt, bei dem statt der Reihenschaltung eine Parallelschaltung verwendet ist.

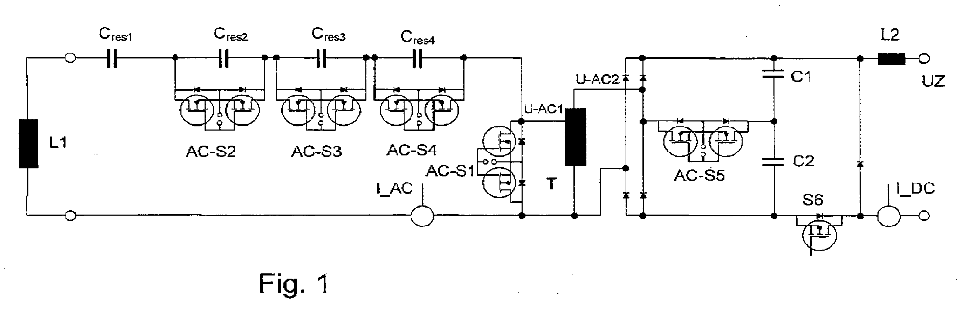

Wie in Figur 1 dargestellt, wird eine Sekundärwicklung L1 mit einer Kapazität C_res1 in Reihe geschaltet.

Innerhalb einer in Figur 1 nicht gezeigten Anlage ist als Primärleiter ein langgestreckter Linienleiter verlegt, der mit einem mittelfrequenten Wechselstrom beaufschlagt wird. Die Sekundärwicklung L1 ist induktiv an diesen Primärleiter gekoppelt vorgesehen und an einem entlang dem Primärleiter verfahrbaren Fahrzeug angeordnet. Vorzugsweise ist das Fahrzeug schienengeführt und der Primärleiter entlang der Schienen verlegt.

Der Kapazität C_res1 ist eine Reihenschaltung von weiteren Kapazitäten (C_res2, C_res2, C_res3) in Reihe zugeschaltet, wobei jeder dieser Kapazitäten (C_res2, C_res2, C_res3) ein jeweiliger steuerbarer Halbleiterschalter (AC-S2, AC-S3, AC-S4) parallel zugeschaltet, so dass durch Öffnen des jeweiligen Schalters die jeweils parallel geschaltete Kapazität wirksam wird und durch Schließen des Schalters unwirksam.

Auf diese Weise ist ein Feinabgleich des aus der Sekundärwicklung L1 und den Kapazitäten bestehenden Reihen-Schwingkreises ermöglicht. Hierbei ist C_res1 derart dimensioniert, dass mittels Zuschalten oder Kurzschließen der Kapazitäten (C_res2, C_res2, C_res3) ein feines Anpassen der Resonanzfrequenz beziehungsweise auch der Resonanzgüte ermöglicht ist.

Statt der gezeigten drei Kapazitäten (C_res2, C_res2, C_res3) mit den zugehörigen Schaltern sind auch eine größere Anzahl von solchen in Reihe geschalteten Kapazitäten mit wiederum zugehörigen Schaltern, die wiederum zur jeweils zugeordneten Kapazität parallel zuschaltbar sind, vorsehbar und somit ein noch feinerer Abgleich und/oder ein weiterer Anpassungsbereich ermöglicht. Mittels des jeweiligen Schalters ist die jeweils zugeordnete Kapazität durch Schließen dieses Schalters kurzschließbar und somit unwirksam machbar. Durch Öffnen dieses Schalters ist wiederum ein Wirksam-Machen der Kapazität erreichbar.

Die Ausgangsspannung U_AC1 des Reihenschwingkreises wird einem Spartransformator T zugeführt, wobei jedoch ein steuerbarer Halbleiterschalter AC-S5 zum Kurzschließen dieses Ausgangs des Reihenschwingkreises ebenfalls vorgesehen ist.

Vorzugsweise gleicht die Induktivität der Unterspannungsseite des Spartransformators im Wesentlichen der Induktivität der Sekundärwicklung L1 des Reihenschwingkreises.

Zum automatischen Abgleich des Schwingkreises ist in Figur 1 wird nämlich zunächst der Schalter AC-S1 kurzgeschlossen, so dass aus der Sekundärwicklung L1 und der Reihenschaltung der Kapazitäten ein unbelasteter Parallelschwingkreis gebildet ist. Schon beim Aufschwingen der ersten Schwingungsperiode ist anhand der Hochlaufkurve, also dem zeitlichen Verlauf von Strom l_AC und an der Sekundärwicklung anliegender Spannung, ein Bestimmen der Phasenlage und Resonanzgüte des Schwingkreises ausführbar. Dabei ist die Phasendifferenz der an der Sekundärwicklung L1 auftretenden Spannung zum erfassten Strom I_AC bestimmbar, insbesondere ohne Beeinflussung durch eine aus dem Schwingkreis zu versorgende Last. Mittels Hinzuschalten oder Wegschalten der Kapazitäten (C_res2, C_res2, C_res3) ist ein Hinregeln auf die gewünschte Resonanzgüte und Phasenverschiebung ausführbar, also ein automatisches Abstimmen des Schwingkreises.

Mittels Betätigung der Schalter (AC-S2, AC-S3, AC-S4) wird dabei der Feinabgleich ausgeführt, so dass die Phasenlage und gegebenenfalls auch die Resonanzgüte möglichst nahe an ihren optimalen Sollwert geführt wird und somit der unbelastete Schwingkreis möglichst gut abgeglichen ist auf die Resonanzfrequenz.

Der Reihenschwingkreis speist eine spannungserhöhende Schaltungsanordnung, die hier beispielshaft einen Hochsetzsteller, wobei die dieser zugeführten Energie über den Schalter AC-S1 gesteuert zuführbar ist, mit einer Spannungsdopplerschaltung aufweist, die den Schalter AC-S5 umfasst.

Bei geöffnetem Schalter AC-S1 wird Energiefluss an die Unterspannungsseite des Spartransformators T geführt, dessen Ausgangsstrom einem einphasigen BrückenGleichrichter zugeführt wird. Zwischen einem Brückenpunkt des Gleichrichters und einem Brückenpunkt einer Reihenschaltung von zwei Kapazitäten C1 und C2 ist ein weiterer steuerbarer Schalter AC-S1 vorgesehen, so dass der AC-S1 Spannungswert der gleichgerichteten Spannung vom Schaltzustand des Schalters AC-S1 abhängt. Dabei ist die Reihenschaltung von zwei Kapazitäten C1 und C2 aus der Ausgangsseite des einphasigen Brücken-Gleichrichters versorgt.

Aus der gleichgerichteten Spannung ist ein Verbraucher versorgbar, wobei ein Schalter S6 zum Zuschalten beziehungsweise Abschalten des für den Verbraucher bereit gestellten Stromes I_DC vorgesehen ist. Der an den Verbraucher geführte Strom I_DC wird über eine Induktivität L2 geführt und somit weiter geglättet. Dieser Strom I_DC wird erfasst und ist als Eingangswert, insbesondere Istwert, eines Reglers verwendbar.

Die gleichgerichtete und geglättete Ausgangsspannung UZ wird ebenfalls erfasst und ist ebenso als Eingangswert, insbesondere Istwert, eines Reglers verwendbar.

Mittels des getakteten Betriebs des Schalters AC-S1 ist ein Aufwärtswandlerbetrieb ausführbar, so dass an der Ausgangsseite des Spartransformators eine höhere Spannung zur Verfügung steht als an der Eingangsseite, also der mittels des Schalters AC-S1 kurzschließbaren Seite. Somit ist als Stellgröße des Reglers die Taktperiode des getakteten Signals, oder beispielsweise das Pulsweitenverhältnis eines pulsweitenmodulierten Signals zur Ansteuerung des Schalters AC-S1 verwendbar.

Da die Schalter als steuerbare Halbleiterschalter ausgeführt sind, ist ein einfaches und schnelles Schalten mittels einer Ansteuerelektronik ermöglicht.

Insbesondere bei schwacher induktiver Kopplung zwischen Primärleiter und Sekundärwicklung und/oder abgesenktem Primärleiterstrom ist mittels des gekatteten Betriebs eine ausreichend hohe Zwischenkreisspannung, also gleichgerichtete Spannung Uz, herstellbar.

In einem weiteren erfindungsgemäßen Ausführungsbeispiel werden die Schalter ( AC-S2, AC-S3, AC-S4 ) getaktet betrieben, insbesondere bei einem geeignet gewählten Phasenwinkel betätigt. Auf diese Weise sind abhängig vom Phasenwinkel verschiedene Zwischenwerte von effektiv wirksamen Kapazitäten im Schwingkreis wirksam machbar. Mittels einer geeigneten Regelung ist sogar während des belasteten Betriebes des Schwingkreises ein Optimieren der induktiv übertragenen Leistung ausführbar.

Die Erfindung ermöglicht wegen der Verwendung des Spartransformators im Aufwärtswandlerbetrieb den Einsatz eines Reihenschwingkreises, wobei die in der Sekundärinduktivität L1 auftretenden Wicklungsspannungen klein haltbar sind. Denn trotz der kleinen Wicklungsspannungen und somit der erhöhten Sicherheit für die Sekundärinduktivität und trotz der gegebenenfalls schwachen induktiven Kopplung der Sekundärinduktivität an den Primärleiter ist eine ausreichend hohe Spannung dem Verbraucher zur Verfügung stellbar, weil der Spartransformator im Aufwärtswandlerbetrieb betreibbar ist und außerdem mittels des Schalters AC-S5 eine Spannungsverdopplung erreichbar ist. Dabei ist mittels des Schalters AC-S5 ein Umschalten von der Spitzenwert-Gleichrichtung des einphasigen Brückengleichrichters zur Spitzen-Spitzenwert-Gleichrichtung ermöglicht. Bei der Spitzenwert-Gleichrichtung gleicht die gleichgerichtete Spannung der maximalen Amplitude des Wechselstroms an der Eingangsseite des Gleichrichters, wenn die Ausgangsseite des Gleichrichters unbelastet ist. Bei der Spitzen-Spitzenwert-Gleichrichtung gleicht die gleichgerichtete Spannung des Doppelten der maximalen Amplitude des Wechselstroms an der Eingangsseite des Gleichrichters, wenn die Ausgangsseite des Gleichrichters unbelastet ist.

Somit ist also ein Einsatz von Sekundärinduktivitäten mit niedriger Leerlaufspannung ermöglicht. Insbesondere weist die Sekundärinduktivität also eine niedrige Windungszahl auf. Auf diese Weise wird auch die induktive Rückwirkung des Sekundärteils auf den Primärleiters verringerbar.

### Bezugszeichenliste

L1 Sekundärwicklung
L2 Induktivität
C1 Kapazität
C2 Kapazität
T Spartrafo, Spartransformator
AC-S1 steuerbarer Halbleiterschalter
AC-S2 steuerbarer Halbleiterschalter
AC-S3 steuerbarer Halbleiterschalter
AC-S4 steuerbarer Halbleiterschalter
AC-S5 steuerbarer Halbleiterschalter
S6 steuerbarer Halbleiterschalter
C_res1 Kapazität
C_res2 Kapazität
C_res3 Kapazität
C_res4 Kapazität
C_res5 Kapazität
I_AC Strom im Resonanzschwingkreis
I_DC unipolarer Ausgangsstrom
UZ unipolare Zwischenkreisspannung

## Patentansprüche

1. Verfahren zum Betreiben einer Anordnung **zur induktiven Energieübertragung an einen elektrischen Verbraucher,**
**wobei eine Sekundärwicklung (L1) induktiv gekoppelt ist mit einem Primärleiter,**
**wobei zur Bildung eines Schwingkreises der Sekundärwicklung (L1) eine Anordnung von Kapazitäten (C_res1, C_res2, C_res2, C_res3) zugeschaltet ist,**
**wobei aus dem Schwingkreis eine Hochsetzstelleranordnung mit** Gleichrichteranordnung versorgt ist, deren **Ausgangsspannung** einen **Verbraucher speist,**
**wobei** in einem ersten Schritt die Ausgangsseite des Schwingkreises weggeschaltet wird, insbesondere indem bei Ausführung als Reihenschwingkreis die Ausgangsseite kurzgeschlossen wird und bei Ausführung als Parallelschwingkreis abgetrennt wird,
**wobei** in einem zweiten Schritt die Phasendifferenz zwischen dem durch die Sekundärspule fließenden Strom und der an der Sekundärspule anliegenden Spannung bestimmt wird,
**wobei mittels Hinzuschalten oder Wegschalten der Kapazitäten (C_res2, C_res2, C_res3) ein Hinregeln auf die gewünschte Resonanzgüte und Phasenverschiebung ausführbar ist, also ein automatisches Abstimmen des Schwingkreises auf die Frequenz des Primärleiterstroms,**
**wobei** in einem dritten Schritt die Ausgangsseite wieder zugeschaltet wird,
**wobei die Hochsetzstelleranordnung einen Spartranformator (T) aufweist, dessen Eingangsstrom derart getaktet betreibbar ist, dass die Ausgangsspannung der Gleichrichtanordnung auf ihren Sollwert hin geregelt wird.**

2. Verfahren nach Anspruch 1,
**dadurch gekennzeichnet, dass**
die Gleichrichteranordnung, insbesondere **ein** Schalter zwischen der Halbbrücke der Gleichrichteranordnung und **einem** Verbindungsknoten derart getaktet betreibbar ist, dass die Ausgangsspannung der Gleichrichtanordnung auf ihren Sollwert hin geregelt wird.

3. Verfahren nach mindestens einem der vorangegangenen Ansprüche,
**dadurch gekennzeichnet, dass**
**Schalter** derart angesteuert werden, dass mittels der zugehörigen Kapazität (C_res1, C_res2, C_res2, C_res3) oder Kapazitäten (C_res1, C_res2, C_res2, C_res3) die Resonanzgüte und/oder die Resonanzfrequenz des Schwingkreises verbessert oder auf einen Sollwert hin gesteuert wird, insbesondere in diskreter Weise.

4. Verfahren nach mindestens einem der vorangegangenen Ansprüche,
**dadurch gekennzeichnet, dass**
**ein** der Eingangsseite **des** Spartransformators (T) zugeschalteter Schalter derart getaktet betrieben wird und/oder das Taktsignal derart gestellt wird, dass die dem Verbraucher zur Verfügung gestellte Ausgangsspannung oder der dem Verbraucher zur Verfügung gestellte Ausgangsstrom auf einen Sollwert hin geregelt wird.

5. Anordnung **dazu eingerichtet, das Verfahren nach mindestens einem der vorangegangenen Ansprüche** zur induktiven Energieübertragung an einen elektrischen Verbraucher **durchzuführen,**
wobei eine Sekundärwicklung (L1) induktiv gekoppelt ist mit einem Primärleiter,
wobei zur Bildung eines Schwingkreises der Sekundärwicklung (L1) eine Anordnung von Kapazitäten (C_res1, C_res2, C_res2, C_res3 zugeschaltet ist,
**wobei** aus dem Schwingkreis eine Hochsetzstelleranordnung mit Gleichrichteranordnung versorgt ist, deren Ausgangsspannung einen Verbraucher speist,
wobei die Anordnung einen Schalter zur Wegschaltung der Ausgangsseite des Schwingkreises aufweist, insbesondere indem bei Ausführung als Reihenschwingkreis die Ausgangsseite kurzgeschlossen werden kann und bei Ausführung als Parallelschwingkreis abtrennbar ist,
wobei die Anordnung Mittel zur Bestimmung der Phasendifferenz zwischen dem durch die Sekundärspule fließenden Strom und der an der Sekundärspule anliegenden Spannung aufweist,
**dadurch gekennzeichnet, dass**
die Hochsetzstelleranordnung einen Spartransformator (T) aufweist, dessen Eingangsstrom, insbesondere primärseitig, mittels eines Schalters AC-S1 steuerbar, insbesondere getaktet betreibbar, ist
wobei die Ausgangsseite des Spartransformators (T), **also** dessen Sekundärseite, der Gleichrichteranordnung zugeführt wird und aus dem Schwingkreis die Eingangsseite eines Spartransformators (T) versorgt ist.

6. Anordnung nach Anspruch 5,
**dadurch gekennzeichnet, dass**
die Ausgangsseite des Spartransformators einen Gleichrichter versorgt, aus dem über Mittel zur Glättung ein Verbraucher versorgbar ist.

7. Anordnung nach einem der Ansprüche 5 oder 6,
**dadurch gekennzeichnet, dass**
der Eingangsseite des Spartransformators (T) ein steuerbarer Schalter parallel oder in Reihe zugeschaltet ist, so dass mittels getakteter Ansteuerung dieses Schalters die Ausgangsspannung auf einen Sollwert hin regelbar ist, insbesondere wobei das Ansteuersignal, insbesondere dessen Frequenz und/oder Pulsweitenmodulationsverhältnis, Stellgröße eines Reglers ist, dem der erfasste Ausgangsspannungswert als Istwert zugeführt wird.

8. Anordnung nach einem der Ansprüche 5 bis 7,
**dadurch gekennzeichnet, dass**
die Gleichrichteranordnung zwischen einer Spitzenwertgleichrichtung und einer Spitze-Spitzenwertgleichrichtung umschaltbar ist, insbesondere also eine Spannungsdopplerschaltung aufweist.

9. Anordnung nach einem der Ansprüche 5 bis 8,
**dadurch gekennzeichnet, dass**
die Gleichrichteranordnung einen Halbbrückengleichrichter aufweist.

10. Anordnung nach einem der Ansprüche 5 bis 9,
**dadurch gekennzeichnet, dass**
der Gleichrichteranordnung ausgangsseitig eine Reihenschaltung von Kapazitäten (C1, C2) zugeschaltet sind, insbesondere parallel zugeschaltet sind, wobei ein Schalter derart zwischen einer Halbbrücke der Gleichrichteranordnung und einem Verbindungsknoten zwischen den Kapazitäten (C1, C2) angeordnet ist, dass eine Beeinflussung der Ausgangsspannung mittels der Schalterstellung dieses Schalters erreichbar ist.

11. Anordnung nach einem der Ansprüche 5 bis 10,
**dadurch gekennzeichnet, dass**
die Gleichrichteranordnung, insbesondere **ein** Schalter zwischen der Halbbrücke der Gleichrichteranordnung und dem Verbindungsknoten derart getaktet betreibbar ist, dass die Ausgangsspannung der Gleichrichtanordnung auf ihren Sollwert hin regelbar ist,
und/oder dass
der Eingangsstrom **an dem** Spartransformator (T) derart getaktet betreibbar ist, dass die Ausgangsspannung der Gleichrichtanordnung auf ihren Sollwert hin regelbar ist.

12. Anordnung nach einem der Ansprüche 5 bis 11,
**dadurch gekennzeichnet, dass**
mindestens eine der Kapazitäten **(C_res2,** C_res2, C_res3) **der Anordnung von Kapazitäten (C_res1, C_res2, C_res2, C_res3)** mit einem zugeordneten, steuerbaren Halbleiterschalter (AC-S2, AC-S3, AC-S4) zuschaltbar oder wegschaltbar ist, insbesondere also für den Schwingkreis wirksam oder unwirksam machbar ist,
insbesondere zum Abstimmen der Resonanzfrequenz des Schwingkreises auf eine Sollfrequenz, insbesondere auf eine Frequenz des in den Primärleiter eingeprägten Stromes.

13. Anordnung nach einem der Ansprüche 5 bis 12,
**dadurch gekennzeichnet, dass**
der Sekundärwicklung (L1) die Anordnung von Kapazitäten (C_res1, C_res2, C_res2, C_res3) parallel oder in Reihe zugeschaltet ist.

14. Anordnung nach einem der Ansprüche 5 bis 13,
**dadurch gekennzeichnet, dass**
die Anordnung von Kapazitäten (C_res1, C_res2, C_res2, C_res3) als eine Parallelschaltung der Kapazitäten (C_res2, C_res3, C_res4) oder eine Reihenschaltung der **Kapazitäten** (C_res2, C_res2, C_res3) ausgeführt ist,
und/oder dass
der Schwingkreis ein Parallelschwingkreis oder ein Reihenschwingkreis ist.

## Claims

1. Method for operating an assembly for inductively transmitting energy to an electric load,
wherein a secondary winding (L1) is inductively coupled to a primary conductor, wherein, to form a resonant circuit of the secondary winding (L1), an assembly of capacitors (C_res1, C_res2, C_res2, C_res3) is switched in,
wherein a boost converter assembly comprising a rectifier assembly, the output voltage of which powers a load, is supplied from the resonant circuit,
wherein, in a first step, the output side of the resonant circuit is switched out, in particular by shorting the output side when in a configuration as a series resonant circuit and by isolating the output side when in a configuration as a parallel resonant circuit,
wherein, in a second step, the phase difference between the current flowing through the secondary coil and the voltage applied to the secondary coil is determined, wherein, by switching the capacitors (C_res2, C_res2, C_res3) in or out, control towards the desired resonance quality factor and phase shift, i.e. automatic adjustment of the resonant circuit to the frequency of the primary conductor current, can be carried out, wherein, in a third step, the output side is switched in again,
wherein the boost converter assembly has an autotransformer (T), the input current of which can be operated in a clocked manner such that the output voltage of the rectifying assembly is controlled towards its setpoint.

2. Method according to claim 1,
**characterised in that**
the rectifier assembly, in particular a switch between the half-bridge of the rectifier assembly and a connection node, can be operated in a clocked manner such that the output voltage of the rectifying assembly is controlled towards its setpoint.

3. Method according to at least one of the preceding claims,
**characterised in that**
switches are actuated such that, by means of the associated capacitor (C_res1, C_res2, C_res2, C_res3) or capacitors (C_res1, C_res2, C_res2, C_res3), the resonance quality factor and/or the resonant frequency of the resonant circuit is improved or controlled towards a setpoint, in particular discretely,

4. Method according to at least one of the preceding claims,
**characterised in that**
a switch switched into the input side of the autotransformer (T) is operated in a clocked manner, and/or the clock signal is set, such that the output voltage made available to the load or the output current made available to the load is controlled towards a setpoint.

5. Assembly configured to carry out the method according to at least one of the preceding claims for inductively transmitting energy to an electric load,
wherein a secondary winding (L1) is inductively coupled to a primary conductor,
wherein, to form a resonant circuit of the secondary winding (L1), an assembly of capacitors (C_res1, C_res2, C_res2, C_res3) is switched in,
wherein a boost converter assembly comprising a rectifier assembly, the output voltage of which powers a load, is supplied from the resonant circuit,
wherein the assembly has a switch for switching out the output side of the resonant circuit, in particular in that the output side can be shorted when in a configuration as a series resonant circuit and can be isolated when in a configuration as a parallel resonant circuit,
wherein the assembly has means for determining the phase difference between the current flowing through the secondary coil and the voltage applied to the secondary coil, **characterised in that**
the boost converter assembly has an autotransformer (T), the input current of which, in particular on the primary side, can be controlled by means of a switch AC-S1, in particular operated in a clocked manner,
wherein the output side of the autotransformer (T), i.e. the secondary side thereof, is fed to the rectifier assembly, and the input side of an autotransformer (T) is supplied from the resonant circuit.

6. Assembly according to claim 5,
**characterised in that**
the output side of the autotransformer supplies a rectifier, from which a load can be supplied via smoothing means.

7. Assembly according to any of claims 5 or 6,
**characterised in that**
a controllable switch is switched into the input side of the autotransformer (T) either in parallel or in series such that, by actuating said switch in a clocked manner, the output voltage can be controlled towards a setpoint, wherein the actuation signal, in particular the frequency and/or pulse-width-modulation ratio thereof, is in particular a manipulated variable of a controller to which the recorded output voltage value is fed as an actual value.

8. Assembly according to any of claims 5 to 7,
**characterised in that**
the rectifier assembly can be switched between a peak rectification and a peak-to-peak rectification, in particular therefore has a voltage doubler circuit.

9. Assembly according to any of claims 5 to 8,
**characterised in that**
the rectifier assembly has a half-bridge rectifier.

10. Assembly according to any of claims 5 to 9,
**characterised in that**
a series circuit of capacitors (C1, C2) is switched into the output of the rectifier assembly, in particular in parallel, wherein a switch is arranged between a half-bridge of the rectifier assembly and a connection node between the capacitors (C1, C2) in such a way that the output voltage can be influenced by means of the switch position of said switch.

11. Assembly according to any of claims 5 to 10,
**characterised in that**
the rectifier assembly, in particular a switch between the half-bridge of the rectifier assembly and the connection node, can be operated in a clocked manner such that the output voltage of the rectifying assembly can be controlled towards its setpoint
and/or **in that**
the input current at the autotransformer (T) can be operated in a clocked manner such that the output voltage of the rectifying assembly can be controlled towards its setpoint.

12. Assembly according to any of claims 5 to 11,
**characterised in that**
at least one of the capacitors (C_res2, C_res2, C_res3) of the assembly of capacitors (C_res1, C_res2, C_res2, C_res3) can be switched into or out of an associated controllable semiconductor switch (AC-S2, AC-S3, AC-S4), in particular therefore can be made active or inactive for the resonant circuit,
in particular to adjust the resonant frequency of the resonant circuit to a target frequency, in particular to a frequency of the current impressed into the primary conductor.

13. Assembly according to any of claims 5 to 12,
**characterised in that**
the assembly of capacitors (C_res1, C_res2, C_res2, C_res3) is switched into the secondary winding (L1) either in parallel or in series.

14. Assembly according to any of claims 5 to 13,
**characterised in that**
the assembly of capacitors (C_res1, C_res2, C_res2, C_res3) is configured as a parallel circuit of the capacitors (C_res2, C_res3, C_res4) or a series circuit of the capacitors (C_res2, C_res2, C_res3)
and/or **in that**
the resonant circuit is a parallel resonant circuit or a series resonant circuit.

## Revendications

1. Procédé de fonctionnement d'un ensemble de transmission d'énergie par induction à un consommateur électrique,
un enroulement secondaire (L1) étant couplé par induction à un conducteur primaire,
un ensemble de capacités (C_res1, C_res2, C_res2, C_res3) étant connecté de façon à former un circuit oscillant de l'enroulement secondaire (L1),
un ensemble élévateur pourvu d'un ensemble redresseur, dont la tension de sortie est fournie à un consommateur, étant alimenté par le circuit oscillant,
dans une première étape, le côté sortie du circuit oscillant étant déconnecté, notamment par court-circuitage du côté sortie lorsqu'il est conçu comme un circuit oscillant série et par séparation lorsqu'il est conçu comme un circuit oscillant parallèle,
dans une deuxième étape, le déphasage étant déterminé entre le courant circulant à la travers la bobine secondaire et la tension appliquée sur la bobine secondaire,
une régulation de la qualité de résonance et du déphasage souhaités, c'est-à-dire une adaptation automatique du circuit oscillant à la fréquence du courant du conducteur primaire, pouvant être effectuée par connexion ou déconnexion des capacités (C_res2, C_res2, C_res3), dans une troisième étape, le côté sortie est à nouveau connecté,
l'ensemble élévateur comportant un autotransformateur (T) dont le courant d'entrée peut être exploité de façon cadencée de manière à ce que la tension de sortie de l'ensemble redresseur soit régulée à sa valeur cible.

2. Procédé selon la revendication 1,
**caractérisé en ce que**
l'ensemble redresseur, en particulier un commutateur situé entre le demi-pont de l'ensemble redresseur et un nœud de liaison, peut être exploité de façon cadencée de manière à ce que la tension de sortie de l'ensemble redresseur soit régulée à sa valeur cible.

3. Procédé selon l'une au moins des revendications précédentes,
**caractérisé en ce que**
des commutateurs sont commandés de manière à ce que la capacité (C_res1, C_res2, C_res2, C_res3) ou les capacités (C_res1, C_res2, C_res2, C_res3) associées améliorent la qualité de résonance et/ou la fréquence de résonance du circuit oscillant ou soient commandées à une valeur cible, notamment de manière discrète.

4. Procédé selon l'une au moins des revendications précédentes,
**caractérisé en ce que**
un commutateur connecté au côté entrée de l'autotransformateur (T) est exploité de façon cadencée et/ou le signal d'horloge est réglé de manière à ce que la tension de sortie mise à la disposition du consommateur ou le courant de sortie mis à la disposition du consommateur soit régulé à une valeur cible.

5. Ensemble conçu pour mettre en œuvre le procédé selon l'une au moins des revendications précédentes de transmission d'énergie par induction à un consommateur électrique,
un enroulement secondaire (L1) étant couplé par induction à un conducteur primaire,
un ensemble de capacités (C_res1, C_res2, C_res2, C_res3) étant connecté pour former un circuit oscillant de l'enroulement secondaire (L1),
un ensemble élévateur pourvu d'un ensemble redresseur, dont la tension de sortie est fournie à un consommateur, étant alimenté par le circuit oscillant,
l'ensemble comportant un commutateur destiné à déconnecter le côté sortie du circuit oscillant, en particulier par court-circuitage du côté sortie lorsqu'il est conçu comme un circuit oscillant série et par séparation lorsqu'il est conçu comme un circuit oscillant parallèle,
l'ensemble comporte des moyens de détermination de la différence de phase entre le courant circulant à travers la bobine secondaire et la tension appliquée sur la bobine secondaire,
**caractérisé en ce que**
l'ensemble élévateur comporte un autotransformateur (T) dont le courant d'entrée, en particulier du côté primaire, peut être commandé au moyen d'un commutateur AC-S1, en particulier peut être exploité de façon cadencée,
le côté sortie de l'autotransformateur (T), c'est-à-dire son côté secondaire, alimentant l'ensemble redresseur et le côté entrée d'un autotransformateur (T) étant alimenté à partir du circuit résonnant.

6. Ensemble selon la revendication 5,
**caractérisé en ce que**
le côté sortie de l'autotransformateur alimente un redresseur à partir duquel un consommateur peut être alimenté par le biais de moyens de lissage.

7. Ensemble selon l'une des revendications 5 ou 6, **caractérisé en ce que**
un commutateur commandable est monté en parallèle ou en série avec le côté entrée de l'autotransformateur (T), de sorte que la tension de sortie peut être régulée à une valeur cible au moyen d'une commande cadencée de ce commutateur, en particulier le signal de commande, en particulier sa fréquence et/ou son rapport de modulation de largeur d'impulsion, étant la grandeur de réglage d'un régulateur auquel la valeur de tension de sortie détectée est amenée comme valeur réelle.

8. Ensemble selon l'une des revendications 5 à 7, **caractérisé en ce que**
l'ensemble redresseur pouvant être commuté entre un redressement de valeur de crête et un redressement de valeur crête à crête, c'est-à-dire qu'il comporte notamment un circuit doubleur de tension.

9. Ensemble selon l'une des revendications 5 à 8, **caractérisé en ce que**
l'ensemble redresseur comporte un redresseur en demi-pont .

10. Ensemble selon l'une des revendications 5 à 9, **caractérisé en ce que**
un montage en série de capacités (C1, C2) est connecté, en particulier connecté en parallèle, à l'ensemble redresseur côté sortie, un commutateur étant disposé entre un demi-pont de l'ensemble redresseur et un nœud de liaison entre les capacités (C1, C2) de manière à ce que la tension de sortie puisse être influencée par la position de ce commutateur.

11. Ensemble selon l'une des revendications 5 à 10, **caractérisé en ce que**
l'ensemble redresseur, en particulier un commutateur situé entre le demi-pont de l'ensemble redresseur et le nœud de liaison, peut être exploité de façon cadencée de manière à ce que la tension de sortie de l'ensemble redresseur puisse être régulée à sa valeur cible,
et/ou **en ce que**
le courant d'entrée de l'autotransformateur (T) peut être exploité de façon cadencée de manière à ce que la tension de sortie de l'ensemble redresseur puisse être régulée à sa valeur cible.

12. Ensemble selon l'une des revendications 5 à 11, **caractérisé en ce que**
l'une au moins des capacités (C_res2, C_res2, C_res3) de l'ensemble de capacités (C_res1, C_res2, C_res2, C_res3) peut être connectée ou déconnectée avec un commutateur à semi-conducteur commandable associé (AC-S2, AC-S3, AC-S4), en particulier peut être rendue opérante ou inopérante pour le circuit oscillant,
notamment pour adapter la fréquence de résonance du circuit oscillant à une fréquence cible, notamment à une fréquence du courant appliqué dans le conducteur primaire.

13. Ensemble selon l'une des revendications 5 à 12, **caractérisé en ce que**
l'ensemble de capacités (C_res1, C_res2, C_res2, C_res3) est connecté en parallèle ou en série à l'enroulement secondaire (L1).

14. Ensemble selon l'une des revendications 5 à 13, **caractérisé en ce que**
l'ensemble des capacités (C_res1, C_res2, C_res2, C_res3) est réalisé sous la forme d'un montage en parallèle des capacités (C_res2, C_res3, C_res4) ou d'un montage en série des capacités (C_res2, C_res2, C_res3),
et/ou **en ce que**
le circuit oscillant est un circuit oscillant parallèle ou un circuit oscillant série.
